(19) Europäisches Patentamt
European Patent Office
Office européen des brevets

(11) EP 2 227 494 B1

(12) EUROPÄISCHE PATENTSCHRIFT

(45) Veröffentlichungstag und Bekanntmachung des Hinweises auf die Patenterteilung:
02.03.2016 Patentblatt 2016/09

(51) Int Cl.:
C08F 8/14 (2006.01)　　C08F 8/46 (2006.01)

(21) Anmeldenummer: 08856974.4

(22) Anmeldetag: 01.12.2008

(86) Internationale Anmeldenummer:
PCT/EP2008/066527

(87) Internationale Veröffentlichungsnummer:
WO 2009/071506 (11.06.2009 Gazette 2009/24)

(54) **VERNETZBARE VINYLESTER-COPOLYMERISATE UND DEREN VERWENDUNG ALS LOW-PROFILE-ADDITIVE**

CROSS-LINKABLE VINYLESTER-COPOLYMERS AND USE THEREOF AS LOW-PROFILE-ADDITIVES

COPOLYMÈRES D'ESTER DE VINYLE RÉTICULABLES ET LEUR UTILISATION COMME ADDITIFS ANTI-RETRAIT

(84) Benannte Vertragsstaaten:
AT BE BG CH CY CZ DE DK EE ES FI FR GB GR HR HU IE IS IT LI LT LU LV MC MT NL NO PL PT RO SE SI SK TR

(30) Priorität: 03.12.2007 DE 102007055694

(43) Veröffentlichungstag der Anmeldung:
15.09.2010 Patentblatt 2010/37

(73) Patentinhaber: Wacker Chemie AG
81737 München (DE)

(72) Erfinder:
• KÖHLER, Thomas
84556 Kastl (DE)
• GRÄWE, René
84034 Landshut (DE)

(74) Vertreter: Schuderer, Michael et al
Wacker Chemie AG
Zentralbereich Patente, Marken und Lizenzen
Hanns-Seidel-Platz 4
81737 München (DE)

(56) Entgegenhaltungen:
EP-A- 0 351 831　GB-A- 1 155 498
GB-A- 1 174 391　US-A- 4 618 658

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung von vernetzbaren Vinylester-Copolymerisaten.

Vernetzbare Vinylester-Copolymerisate sind Polymerisate auf Basis von ethylenisch ungesättigten Vinylester-Monomeren und weiteren ethylenisch ungesättigten Monomeren mit zusätzlichen funktionellen Gruppen, die unmittelbar oder mittelbar nach einer Transformation zur Vernetzung geeignet sind. Vinylester-Copolymerisate werden üblicherweise durch radikalisch initiierte Polymerisation nach dem Emulsionspolymerisationsverfahren hergestellt.

Vernetzbare Vinylester-Copolymerisate werden in unterschiedlichen Anwendungsfeldern eingesetzt. Beispielsweise wird in der JP-A 04325531 der Einsatz von Ethylen-Vinylacetat-Glycidylmethacrylat-Terpolymeren mit einem Gehalt von 2 bis 20 Gew.-% an Glycidylmethacrylat in Schutzfilmen von Solarzellen beschrieben. In der EP-A 0897376 und der US-A 4716080 werden Vinylacetat-Glycidylmethacrylat-Copolymere als Schlichte für Glasfasern vorgeschlagen. Vinylchlorid-Vinylacetat-Glycidylmethacrylat-Copolymere werden in der JP-A 08221738 unter anderem als Beschichtungsmittel für Magnetbänder erwähnt.

In der GB1174391, Beispiel 8, wird die Umsetzung eines Copolymer Vinylacetat/ Glycidylmethacrylat mit Acrylsäure in der Lösung beschrieben. In der GB-A 1456412 werden Terpolymere auf Basis von Vinylacetat, (Meth)äcrylsäureestern und 0.1 bis 2 Gew.-% an ethylenisch ungesättigten Epoxiden beschrieben, die durch Aushärten mit Phosphorsäure oder Phosphorsäureestern in druckempfindliche Klebstoffe (auch bekannt unter der Abkürzung PSA: Pressure sensitive adhesives) überführt werden. In der US 3579490 werden Copolymere beschirieben, die ebenfalls als PSA eingesetzt werden können und die durch Lösungs- oder Emulsionspolymerisation von ethylenisch ungesättigten Monomeren wie (Meth)acrylsäureestern und 0.5 bis 15 Gew.-% von beispielsweise Glycidylacrylat oder Allylglycidylether sowie gegebenenfalls Vinylacetat und/oder Acrylsäure zugänglich sind. Die Copolymere haben eine Tg von -15 bis -65°C. Selbstvernetzende Copolymerisate werden in der US 3317453 beschrieben. Diese werden durch Lösungspolymerisation von Vinylacetat mit je 5 mol% Acrylsäure und Glycidylmethacrylat erhalten und lassen sich in Gegenwart eines Katalysators, wie beispielsweise Titanspezies, innerhalb von 5 Minuten bei 90°C zu einem Film vernetzen.

Aus der EP-A 1682591 sind lösliche Vinylpolymere aus einfach ungesättigten Monomeren und mehrfach ungesättigten Monomeren bekannt, wobei die Monomere in organischen Lösungsmitteln unlöslich sein sollen. Die mehrfach ungesättigten Monomere werden mit Cyclodextrinen komplexiert und anschließend mit den einfach ungesättigten Monomeren copolymerisiert.

Aus der DE-A 1932715 sind Vinylpolymere bekannt, die durch polymeranaloge Umsetzung von teilhydrolysiertem Polyviriylacetat mit Säurehalogeniden von Acrylsäurederivaten erhalten werden, wobei 20 bis 95% der Hydroxylgruppen umgesetzt wurden und die so erhältlichen Vinylpolymere 0,3 bis 7,0 ungesättigte Säureeinheiten je 1000 Molekulargewichtseinheiten enthalten. Die vernetzbaren, ethylenisch ungesättigten Gruppen sind allerdings direkt über eine Estergruppe an die Hauptkette der Vinylpolymere gebunden und damit einer Vernetzung mit ethylenisch ungesättigten Gruppen anderer Vinylpolymere schwer zugänglich, was sich negativ auf die Vernetzungsgeschwindigkeit auswirkt. Die Vinylpolymere wer den zusammen mit (Meth)acrylaten oder Styrol als Bestandteil von Anstrichmassen unter Einsatz von Elektronenstrahlen auf phosphatiertem Stahl gehärtet.

In der EP-A 0506703 sind vernetzbare Copolymerisate beschrieben, die durch polymeranaloge Umsetzungen von geeignet funktionalisierten Vinylester-Vinylaromaten-Copolymerisaten mit ethylenisch ungesättigten, funktionalisierten Monomeren erhältlich sind. Die so erhältlichen vernetzbaren Copolymerisate haben Molekulargewichte Mn von 1.500 bis 6.000 g/mol und eignen sich beispielsweise zum Einsatz in Beschichtungsmitteln für Reparaturlackierungen von Kraftfahrzeugen. Copolymerisate mit derartig niedrigen Molekulargewichten Mn haben allerdings häufig nicht die in vielen Anwendungen gewünschten mechanischen Eigenschaften, wie beispielsweise eine hohe Abriebbeständigkeit, eine hohe mechanische Biege- und Zugfestigkeit oder eine hohe Elastizität, und weisen eine erhöhte Migrationsneigung in Beschichtungen auf. Zudem enthalten die Vinylester-VinylaromatenCopolymerisate sehr hohe Mengen an nichtpolymerisierten. Monomeren (Restmonomere), die deutlich über 5 Gew.-% liegen, bezogen auf den Vinylestergehalt der Copolymerisate. Die Restmonomere können bei Einsatz der Copolymerisate, beispielsweise bei der Herstellung von Beschichtungen, zu Verlaufstörungen führen und darüber hinaus die Umwelt mit flüchtigen organischen Substanzen belasten.

Vor diesem Hintergrund bestand die Aufgabe, vernetzbare Vinylester-Copolymerisate, die ein verbessertes mechanisches Eigenschaftsprofil aufweisen und trotz hoher Reaktivitäten hinsichtlich Vernetzung lagerstabil sind, sowie Verfahren zu deren Herstellung bereitzustellen. Die vernetzbaren Vinylester-Copolymerisate sollten insbe sondere zur Verwendung als LPA geeignet sein.

Die Aufgabe wurde mit vernetzbaren Vinylester-Copolymerisaten mit Molekulargewichten Mn von $\geq$ 6.500 g/mol gelöst, die durch polymeranaloge Umsetzung von Epoxy-substituierten Vinylester-Basispolymerisaten mit ethylenisch ungesättigten Säuren erhalten wurden, wodurch vernetzbare, ethylenisch ungesättigte Gruppen in das Polymerisat eingebracht wurden. Die polymeranaloge Umsetzung der Bäsispolymerisate mit einer oder mehreren ethylenisch ungesättigten Säuren erfolgt in Schmelze. Auf Grund der hohen Molekulargewichte Mn weisen die vernetzbaren Vinylester-Copolymerisate vorteilhafte mechanische Eigenschaften auf. Zudem sind die vernetzbaren, ethylenisch ungesättigten Gruppen um eine Monomereinheit, nämlich um die vormaligen Epoxy-Gruppen tragenden Einheiten der Basispolymerisate, von der Hauptkette der vernetzbaren Vinylester-Copolymerisate entfernt. Dies führt in Kombination mit den hohen Molekulargewichten Mn zu sehr hohen Vernetzungsgeschwindigkeiten und damit zu einer raschen Aushärtbarkeit der vernetzbaren Vinylester-Copolymerisate. Ü-berraschenderweise sind die vernetzbaren Copolymerisate trotz ihrer raschen Aushärtbarkeit lagerstabil. Denn gerade bei vernetzbaren Polymerisaten mit hohen Molekulargewichten Mn führen schon geringe Vernetzungsgrad zu Trübung bzw. Gelierung oder gar zur unerwünschten Aushärtung während der Lagerung.

Beschrieben sind vernetzbare Vinylester-Copolymerisate erhältlich mittels radikalisch initiierter Polymerisation von

   a) einem oder mehreren Vinylestern und
   b) einem oder mehreren ethylenisch ungesättigten, Epoxyfunktionellen Monomeren, und

anschließender polymeranaloger Umsetzung der so erhaltenen Basispolymerisate mit einer oder mehreren ethylenisch ungesättigten Säuren g), so dass zumindest eine ethylenisch ungesättigte, polymerisierbare Gruppe pro Basispolymerisat eingebracht wird, dadurch gekennzeichnet, dass die vernetzbaren Vinylester-Copolymerisate Molekulargewichte Mn von $\geq$ 6.500 g/mol haben.

Die vernetzbaren Vinylester-Copolymerisate haben Molekulargewichte Mn von bevorzugt 6.500 bis 300.000 g/mol, besonders bevorzugt von 10.000 bis 100.000 g/mol und am meisten bevorzugt von 15.000 bis 80.000 g/mol. Die Angaben zu den Molekulargewichten Mn beziehen sich auf die Bestimmungsmethode mittels SEC ("Size Exclusion Chromatography") unter Einsatz eines Polystyrol-Standards in THF bei 60°C.

Bei der Polymerisation werden als Vinylester a) bevorzugt ein oder mehrere Vinylester von unverzweigten oder verzweigten Alkylcarbonsäuren mit 1 bis 20 C-Atomen eingesetzt. Besonders bevorzugte Vinylester sind Vinylester von unverzweigten oder verzweigten Carbonsäuren mit 1 bis 15 C-Atomen. Beispiele für besonders bevorzugte Vinylester sind Vinylacetat, Vinylpropionat, Vinylbutyrat, Vinyl-2-ethylhexanoat, Vinyllaurat, 1-Methylvinylacetat und Vinylester von $\alpha$-verzweigten Monocarbonsäuren mit 5 bis 13 C-Atomen, beispielsweise Vinylpivalat, Veo-Va9[R], VeoVa10[R] oder VeoVa11[R] (Handelsnamen der Firma Hexion). Am meisten bevorzugt sind Vinylacetat, Vinylpivalat, Vinyllaurat, VeoVa9[R] und VeoVa10[R].

Vorzugsweise werden 15 bis 99,9 Gew.-% Vinylester a) eingesetzt, besonders bevorzugt 20 bis 99 Gew.-%, jeweils bezogen auf das Gesamtgewicht der Monomere zur Herstellung der Basispolymerisate.

Die ethylenisch ungesättigten, Epoxy-funktionellen Monomere b) haben bevorzugt 1 bis 20 C-Atome, besonders bevorzugt 1 bis 10 C-Atome, die linear oder verzweigt, offenkettig oder cyclisch angeordnet sein können.

Beispiele für bevorzugte ethylenisch ungesättigte, Epoxy-funktionelle Monomere b) sind Glycidylacrylat, Glycidylmethacrylat (GMA) oder Allylglycidylether; besonders bevorzugt sind Glycidylacrylat und Glycidylmethacrylat; am meisten bevorzugt ist Glycidylmethacrylat.

Vorzugsweise werden 0,1 bis 20 Gew.-% ethylenisch ungesättigte, Epoxy-funktionelle Monomere b) eingesetzt, besonders bevorzugt 0,2 bis 15 Gew.-%, jeweils bezogen auf das Gesamtgewicht der Monomere zur Herstellung der Basispolymerisate.

Als zusätzliche Monomere zur Herstellung der Basispolymerisate können ein oder mehrere ethylenisch ungesättigte Monomere c) copolymerisiert werden. Geeignete Monomere c) werden ausgewählt aus der Gruppe umfassend Acrylsäureester und Methacrylsäureester von unverzweigten oder verzweigten Alkoholen mit 1 bis 20 C-Atomen, Vinylaromaten, Olefine, Diene und Vinylhalogenide.

Bevorzugte Monomere c) aus der Gruppe der Ester der Acrylsäure oder Methacrylsäure sind Ester von unverzweigten oder verzweigten Alkoholen mit 1 bis 15 C-Atomen. Besonders bevorzugte Acrylsäureester oder Methacrylsäureester sind Methylacrylat, Methylmethacrylat, Ethylacrylat, Ethylmethäcrylat, Propylacrylat, Propylmethacrylat, n-, iso- und t-Butylacrylat, n-, iso- und t-Butylmethacrylat, 2-Ethylhexylacrylat, Norbornylacrylat, Isobornylacrylat, Stearylacrylat. Am meisten bevorzugte Acrylsäureester oder Methacrylsäureester sind Methylacrylat, Ethylacrylat, Methylmethacrylat, n-, iso- und t-Butylacrylat, 2-Ethylhexylacrylat und Isobornylacrylat.

Bevorzugte Diene sind 1,3-Butadien und Isopren. Bevorzugte Olefine sind Ethen und Propen. Bevorzugte Vinylhalogenide sind Vinylchlorid, Vinylidenchlorid oder Vinylfluorid, besonders bevorzugt ist Vinylchlorid. Bevorzugte Vinylaromaten sind Styrol und Vinyltoluol. Vorzugsweise werden aber zur Herstellung der Basispolymerisate keine Vinylaromaten als Comonomere eingesetzt. Insbesondere bei Durchführung der Polymerisation in Abwesenheit von Vinylaromaten werden Basispolymerisate mit geringen Gehalten an Restmonomeren erhalten.

Bevorzugt werden 0 bis 70 Gew.-%, besonders bevorzugt 2 bis 50 Gew.-% ethylenisch ungesättigte Monomere c) eingesetzt, jeweils bezogen auf das Gesamtgewicht der Monomere zur Herstellung der Basispolymerisate.

Als zusätzliche Monomere zur Herstellung der Basispolymerisate können auch ein oder mehrere ethylenisch ungesättigte Monomere d) copolymerisiert werden. Beispiele für Monomere d) sind ethylenisch ungesättigte Mono- und Dicarbonsäuren oder deren Salze, vorzugsweise Crotonsäure, Acrylsäure, Methacrylsäure, Fumarsäure oder Maleinsäure; Mono- und Diester der Fumarsäure oder der Maleinsäure, vorzugsweise deren Ethyl- oder Isopropylester; ethylenisch ungesättigte Sulfonsäuren oder deren Salze, vorzugsweise Vinylsülfonsäure, 2-Acrylamido-2-methylpropansulfonsäure; ethylenisch ungesättigte Alkohole, vorzugsweise 2-Hydroxyethylacrylat, Hydroxypropylacrylat, 2-Hydroxyethylmethacrylat, Hydroxypropylmethacrylat, oder Glycerin-1-allylether; ethylenisch ungesättigte primäre, sekundäre oder tertiäre Amine, Vorzugsweise 2-Dimethylaminoethylmethacrylat, 2-tert. Butylaminoethylmethacrylat, Allyl-N-(2-aminoethyl)-carbamat-hydrochlorid, Allyl-N-(6-aminohexyl)-carbamat-hydrochlorid, Allyl-N-(3-aminopropyl)-hydrochlorid, Allylamin oder Vinylpyridin; ethylenisch ungesättigte Amide, vorzugsweise 3-Dimethylaminopropylmethacrylamid, 3-Trimetylammoniumpropylmethacrylamidchlorid; Phosphonsäuren oder deren Salze, vorzugsweise Vinylphosphonsäure, SIPOMER PAM-100[R] oder SIPOMER-200[R] (Handelsnamen der Firma Rhodia).

Besonders bevorzugte Monomere d) sind Crotonsäure, Acrylsäure, Methacrylsäure, 2-Hydroxyethylacrylat und 2-Hydroxyethylmethacrylat.

Bevorzugt werden 0 bis 20 Gew.-%, besonders bevorzugt 0 bis 15 Gew.-% Monomere d) eingesetzt, jeweils bezogen auf das Gesamtgewicht der Monomere zur Herstellung der Basispolymerisäte.

Als zusätzliche Monomere zur Verstellung der Basispolymerisate können auch ein oder mehrere ethylenisch ungesättigte Monomere e) copolymerisiert werden. Bevorzugte Monomere e) sind ethylenisch ungesättigte Isocyanate, vorzugsweise 1-(Isocyanato-1-methyl)-3-(methylethyl)benzol) oder ethylenisch ungesättigte Anhydride, vorzugsweise Maleinsäureahhydrid.

Ein besonders bevorzugtes Comonomer e) ist 1-(Isocyanato-1-methyl)-3-(methylethyl)benzol.

Vorzugsweise werden 0 bis 20 Gew.-%, besonders bevorzugt 0 bis 15 Gew.-% Comonomere e) eingesetzt, jeweils bezogen auf das Gesamtgewicht der Monomere zur Herstellung der Basispolymerisate.

Als zusätzliche Monomere zur Herstellung der Basispolymerisate können auch ein oder mehrere Silan-Monomere f) eingesetzt werden. Geeignete Silan-Monomere f) sind polymerisierbare Silane bzw. Mercaptosilane in hydrolisierter Form. Bevorzugt sind gamma-Acryl- bzw. gamma-Methacryloxypropyltri(alkoxy)silane, $\alpha$-Methacryloxymethyltri(alkoxy)silane, gamma-Methacryloxypropylmethyldi(alkoxy)silane, Vinylalkyldi(alkoxy)silane und Vinyltri(alkoxy)silane, wobei als Alkoxygruppen beispielsweise Methoxy-, Ethoxy-, Propoxy-, Isopropoxy-, Methoxyethylen, Ethoxyethylen-, Methoxypropylenglykolether- oder Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropyltriethoxysilan, 3-Methacryloxypropylmethyldimethoxysilan, 3-Methacryloxypropylmethyldiethoxysilan, Methacryloxymethyltrimethoxysilan, Methacryloxymethyltriethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)propylbernsteinsäureanhydrid. Bevorzugt werden auch 3-Mercaptopropyltrimethoxysilan, 3-Mercaptopropyltriethoxysilan, Methacryloxymethyltriethoxysilan und 3-Mercaptopropylmethyldimethoxysilan. Die Silan-Monomere f) enthalten vorzugsweise keine Silikonmakromer-Einheiten, wie beispielsweise Silikonmakromer-Einheiten mit mindestens 10 Siloxanwiederholungseinheiten. Die Basispolymerisate bzw. die vernetzbaren Vinylester-Copolymerisate enthalten also vorzugsweise keine Silikonmakromer-Einheiten.

Die Silan-Monomere f) werden im Allgemeinen zu einem Anteil von bis zu 10 Gew.-% eingesetzt, bezogen auf das Gesamtgewicht der Monomere zur Herstellung der Basispolymerisate.

Bevorzugt sind Basispolymerisate erhältlich mittels radikalisch initiierter Polymerisation von einem oder mehreren Vinylestern a) ausgewählt aus der Gruppe umfassend Vinylacetat, Vinylpivalat, Vinyllaurat, VeoVa9[R], VeoVa10[R] und VeoVa11[R], und einem oder mehreren ethylenisch ungesättigten, Epoxy-funktionellen Monomeren b) ausgewählt aus der Gruppe umfassend Glycidylacrylat, Glycidylmethacrylat (GMA) oder Allylglycidylether, und gegebenenfalls einem oder mehreren Monomeren c) ausgewählt aus der Gruppe der (Meth)acrylsäureester, wie insbesondere Methylacrylat, Methylmethacrylat, Ethylacrylat, n- und t-Butylacrylat, 2-Ethylhexylacrylat, Isobornylacrylat und Stearylacrylat, aus der Gruppe der Diene, wie insbesondere Isopren oder 1,3-Butadien, aus der Gruppe der Olefine, wie insbesondere Ethen, Propen oder Styrol, und aus der Gruppe der Vinylhalogenide, wie insbesondere Vinylchlorid oder Vinylidenchlorid, und gegebenenfalls einem oder mehreren Monomeren d) ausgewählt aus der Gruppe umfassend Acrylsäure, Methacrylsäure, Crotonsäure, Fumarsäure, Maleinsäure, 2-Hydroxyethylacrylat, 2-Hydroxyethylmethacrylat, und gegebenenfalls einem oder mehreren Monomeren e) und gegebenenfalls einem oder mehreren Silan-Monomere f).

Die Basispolymerisate haben Molekulargewichte Mn von bevorzugt 6.500 bis 300.000 g/mol, besonders bevorzugt 10.000 bis 100.000 g/mol und am meisten bevorzugt von 15.000 bis 80.000 g/mol.

Für die polymeranaloge Umsetzung der Basispolymerisate werden vorzugsweise ein oder mehrere ethylenisch ungesättigte Säuren g) eingesetzt, ausgewählt aus der Gruppe der ethylenisch ungesättigten Carbonsäuren oder deren Salze, insbesondere der ethylenisch ungesättigten Mono- und Dicarbonsäuren oder deren Salze, umfassend Acrylsäure, Methacrylsäure, Crotonsäure, 2-Hydroxyethylacrylat, 2-Hydroxyethylmethacrylat, Fumarsäure oder Maleinsäure; Monoester der Fumarsäure oder der Maleinsäure, vorzugsweise deren Ethyl- oder Isopropylester; sowie langkettige ungesättigte Fettsäuren. Besonders bevorzugt werden Acrylsäure, Methacrylsäure oder Crotonsäure eingesetzt.

Bei den vernetzbaren Vinylester-Copolymerisaten handelt es sich um vollständig modifizierte vernetzbare Vinylester-Copolymerisate oder um teilmodifizierte vernetzbare Vinylester-Copolymerisate. Vollständig modifizierte vernetzbare Vinylester-Copolymerisate sind erhältlich, indem bei der polymeranalogen Umsetzung sämtliche epoxyfunktionellen Gruppen der Monomereinheiten b) der Basispolymerisate mit ethylenisch ungesättigten Säuren g) umgesetzt werden. Teilmodifizierte vernetzbare Vinylester-Copolymerisate sind erhältlich, indem bei der polymeranalogen Umsetzung nicht alle epoxyfunktionellen Gruppen der Monomereinheiten b) der Basispolymerisate mit ethylenisch ungesättigten Säuren g) umgesetzt werden. Die teilmodifizierten vernetzbaren Vinylester-Copolymerisate sind also zumindest mit ethylenisch ungesättigten Gruppen der Säuren g) und mit Epoxygruppen der nicht umgesetzten Monomereinheiten b) funktionalisiert.

Vorzugsweise sind 10 bis 100 % der in den vernetzbaren Vinylester-Copolymerisaten enthaltenen Monomereinheiten b) mit ethylenisch ungesättigten Säuren g) modifiziert.

Vernetzbare Gruppen der vernetzbaren Vinylester-Copolymerisate sind sowohl die ethylenisch ungesättigten Gruppen der Einheiten g) als auch die funktionellen Gruppen der optionalen Monomereinheiten d) bis f) und bei teilmodifizierten vernetzbaren Vinylester-Copolymerisaten zusätzlich die Epoxygruppen der Monomereinheiten b).

Die vernetzbaren Vinylester-Copolymerisate haben pro Molekularmasse Mn von 1.000 g/mol bevorzugt 0,001 bis 100, besonders bevorzugt 0,01 bis 50, ganz besonders 0,1 bis 10 und am meisten bevorzugt 0,1 bis 5 vernetzbare Gruppen.

Der Erfindung ist ein Verfahren zur Herstellung der vernetzbaren Vinylester-Copolymerisate durch radikalisch initiierte Polymerisation von

a) einem oder mehreren Vinylestern und
b) einem oder mehreren ethylenisch ungesättigten, Epoxyfunktionellen Monomeren, und
anschließender polymeranaloger Umsetzung der so erhaltenen Basispolymerisate mit einer oder mehreren ethylenisch ungesättigten Säuren g), so dass zumindest eine ethylenisch ungesättigte, polymerisierbare Gruppe pro Basispolymerisat eingebracht wird. dadurch gekennzeichnet, dass die polymeranaloge Umsetzung der Basispolymerisate mit einer oder mehreren ethylenisch ungesättigten Säuren in Schmelze erfolgt, und
die vernetzbaren Vinylester-Copolymerisate Molekulargewichte Mn von $\geq$ 6.500 g/mol haben.

Die Basispolymerisate werden mittels radikalischer Substanz-, Suspensions-, Emulsions- oder Lösungspolymerisatiönsverfahren der Monomere a) und b) sowie gegebenenfalls der Monomere c) bis f) in Gegenwart von Radikalinitiatören erhalten. Die Basispolymerisate werden bevorzugt mittels Substanz- oder Lösungspolymerisationsverfahrensverfahren hergestellt.

Bei Durchführung des Lösungspolymerisationsverfahrens werden als Lösungsmittel vorzugsweise ein organisches Lösungsmittel oder ein Gemisch organischer Lösungsmittel oder ein Gemisch von einem oder mehreren organischen Lösungsmitteln und Wasser eingesetzt. Bevorzugte Lösungsmittel oder bevorzugte Lösungsmittelkömponenten in Lösungsmittelgemischen werden ausgewählt aus der Klasse der Alkohole, Ketone, Ester, Ether, aliphatischen Kohlenwasserstoffe, aromatischen Kohlenwasserstoffe und Wasser. Besonders bevorzugte Lösungsmittel sind aliphatische Alkohole mit 1 bis 6-C-Atomen wie Methanol, Ethanol, n-Propanol oder i-Propanol, Ketone wie Aceton oder Methylethylketon, Ester wie Methylacetat, Ethylacetat, Propylacetat oder Butylacetat oder Wasser. Am meisten bevorzugt sind Methanol, i-Propanol, Methylacetat, Ethylacetat und Butylacetat.

Die Reaktionstemperatur für die Herstellung der Basispolymerisate beträgt 20°C bis 160°C, vorzugsweise 40°C bis 140°C. Im Allgemeinen wird bei Normaldruck unter Rückfluss polymerisiert. Bei der Copolymerisation von gasförmigen Monomeren wie Ethylen wird bei Raumtemperatur unter Druck, im Allgemeinen wischen 1 und 100 bar, gearbeitet.

Geeignete Radikalinitiatoren sind beispielsweise öllösliche Initiatoren, wie t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylpevoxy)-3,3,5-trimethylcyclohexan und Di-(4-t-Butylcyclohexyl)peroxydicarbonat. Geeignet sind auch Azoinitiatoren wie Azobisisobutyronitril. Die Initiatoren werden im Allgemeinen in einer Menge von 0.005 bis 3.0 Gew.-%, bevorzugt 0.01 bis 1.5 Gew.-%, jeweils bezogen auf Gesamtgewicht der Monomere zur Herstellung der Basispolymerisate, eingesetzt.

Die Einstellung des Molekulargewichts und des Polymerisationsgrades ist dem Fachmann bekannt. Diese kann z.B. durch Zugabe von Regler, durch das Verhältnis von Lösungsmittel zu Monomeren, durch Variation der Initiatorkonzentration, durch Dosiervariation von Monomeren und durch Variation der Polymerisationstemperatur erfolgen. Regler oder Kettentransfermittel sind zum Beispiel Alkohole, wie Methanol, Ethanol und Isopropanol, Aldehyde oder Ketone, wie Acetaldehyd, Propionaldehyd, Butyraldehyd, Aceton oder Methylethylketon, aber auch mercaptogruppenhaltige Verbindungen, wie Dodecylmercaptan, Mercaptopropionsäure oder mercaptogruppenhaltige Silicone.

Die Polymerisation kann unter Vorlage aller oder einzelner Bestandteile des Reaktionsgemisches, oder unter teilweiser Vorlage und Nachdosierung aller oder einzelner Bestandteile des Reaktionsgemisches, oder nach dem Dosierverfahren ohne Vorlage durchgeführt werden. Vorzugsweise wird so vorgegangen, dass ein Teil der gesamten Menge an Vinylester a) und Monomeren b), sowie gegebenenfalls an Monomeren c), d), e) und f) und ein Teil des Lösungsmittels und Reglers und Initiators vorgelegt werden und die verbleibende Menge an Vinylester a) und Monomeren b), sowie gegebenenfalls an Monomeren c), d), e) und f) und des Lösungsmittels und Reglers und Initiators zudosiert wird. Bei Durchführung eines Batch-Verfahrens werden alle Monomere, Lösungsmittel und Regler und ein Teil des Initiators vorgelegt, und der Initiatorrest wird zudosiert oder stoßweise zugegeben.

Bei Durchführung der Suspensions-, Emulsions- oder Lösungspolymerisationsverfahren wird die Polymerisation im Allgemeinen bis zu einem Festgehalt von 15 bis 99,5 %, bevorzugt bis zu einem Festgehalt von 40 bis 99 %, durchgeführt.

Nach Abschluss der Polymerisation kann zur Restmonomerentfernung in Anwendung bekannter Methoden nachpolymerisiert werden. Flüchtige Restmonomere und weitere flüchtige Bestandteile können auch mittels Destillation oder Strippverfahren, vorzugsweise unter reduziertem Druck, entfernt werden.

Die Basispolymerisate haben einen Gehalt an Restmonomeren von bevorzugt ≤ 5 Gew.-%, besonders bevorzugt von ≤ 2 Gew.-% und am meisten bevorzugt von ≤ 1 Gew.-%.

Durch polymeranaloge Umsetzung der Basispolymerisate mit einer oder mehreren ethylenisch ungesättigten Säuren g) werden schließlich die vernetzbaren Vinylester-Copolymerisate erhalten.

Die polymeranalogen Umsetzungen der Basispolymerisate mit ethylenisch ungesättigten Säuren g) erfolgen in Schmelze. Dazu werden die zur Herstellung der entsprechenden Basispolymerisate eingesetzten Lösungsmittel oder Lösungsmittelgemische vor der polymeranalogen Umsetzung entfernt. Voraussetzung für rasche Umsetzungen in der Schmelze sind nicht zu hohe Schmelzviskositäten der Polymere von vorzugsweise ≤ 10.000 Pa·s bei 135°C.

Die polymeranalogen Umsetzungen werden bevorzugt in Temperaturbereichen zwischen 40 und 180°C, bevorzugt zwischen 90 und 150°C durchgeführt.

Die Glasübergangstemperatur Tg und das Molekulargewicht Mw bzw. Mn der vernetzbaren Vinylester-Copolymerisate können in bekannter Weise durch die Wahl der Monomere a bis g) und deren Anteilen am Gesamtgewicht der vernetzbaren Vinylester-Copolymerisate sowie durch die Polymerisationsbedingungen bei der Herstellung der Basispolymerisate eingestellt werden, wie beispielsweise durch die Initiatorkonzentration, Polymerisationstemperatur, Regler und Reglerkonzentration sowie Lösungsmittel und Lösungsmittelgehalt. Die Glasübergangstemperatur Tg der vernetzbären Vinylester-Copolymerisate ist bevorzugt ≥ -100°C, und besonders bevorzugt ≥ -100°C und ≤ 150°C und am meisten bevorzugt ≥ -70°C und ≤ 150°C.

Die vernetzbaren Vinylester-Copolymerisate haben einen Gehalt an Restmonomeren von bevorzugt ≤ 5 Gew.-%, besonders bevorzugt von ≤ 2 Gew.-% und am meisten bevorzugt von ≤ 1 Gew.-%.

Die vernetzbaren Vinylester-Copolymerisate können durch Zugabe von Initiatoren oder Katalysatoren mit sich oder mit anderen organischen oder anorganischen Stoffen vernetzen. Die Vernetzung kann auch durch Elektronenstrahlung oder in Gegenwart geeigneter Initiatoren durch UV-Strahlung bewirkt werden. Die Vernetzung erfolgt bei Raumtemperatur oder bei erhöhter Temperatur.

Die vernetzbaren Vinylester-Copolymerisate zeichnen sich insbesondere auf Grund ihrer Polymerstruktur und ihres hohen Molekulargewichts Mn selbst beigeringen Gehalten an vernetzbaren Gruppen pro Polymerkette durch hohe Vernetzungsgeschwindigkeiten aus. Dabei werden von den vernetzbaren Gruppen besonders die ethylenisch ungesättigten Gruppen der Einheiten g) unter hohen Vernetzungsgeschwindigkeiten vernetzt. Die hohe Vernetzungsgeschwindigkeit macht sich beispielsweise durch einen sehr schnellen Viskositätsanstieg während der Vernetzung bemerkbar.

Die Vernetzungsgeschwindigkeit kann durch die Temperatur, die Halbwertszeiten der Initiatoren, durch Verwendung von Initiatorbeschleunigern oder durch die Initiatorkonzentration gesteuert werden. Als Initiatoren für die UV-Vernetzung werden dem Fachmann bekannte UV-Initiatoren eingesetzt.

Teilmodifizierte vernetzbare Vinylester-Copolymerisate können aufgrund ihrer unterschiedlichen funktionellen Gruppen unter Dual-Vernetzung mit Substraten verknüpft werden. Unter Dual-Vernetzung ist das Austreten zweier verschiedener Vernetzungsmechanismen gemeint, wie z.B. radikalische und thermische Vernetzungsmechanismen. Diese unterschiedlichen Vernetzungsmechanismen können gleichzeitig oder nacheinander ablaufen. Auf diese Weise können die Haftungseigenschaften der vernetzbaren Vinylester-Copolymerisate auf Substraten beeinflusst werden.

Die Monomereinheiten a) bis f) der Basispolymerisate bzw. die Monomereinheiten a) bis g) der vernetzbaren Vinylester-Copolymerisate sind vollständig miteinander kompatibel und führen zu keiner unerwünschten Vernetzung. Eine Vernetzung tritt erst auf Zugabe eines Vernetzungskatalysators auf Die Basispolymerisate bzw. vernetzbaren Vinylester-Copolymerisate sind also lagerstabil.

Die vernetzbaren Vinylester-Copolymerisate sind zur Beschichtung von Textilien, Papier, Folien und Metallen geeignet, beispielsweise als Schutz- oder als Antifouling-Beschichtung. Ein weiteres Anwendungsgebiet ist der Bautenschutz, insbesondere zur Herstellung von witterungsbeständigen Beschichtungen oder Dichtstoffen. Die vernetzbaren Vinylester-Copolymerisate sind auch als Modifizierungsmittel geeignet und als Additiv in der Kunststoffverarbeitung, Verpackungsindustrie und können beispielsweise eine Sauerstoffbarriere darstellen.

Die vernetzbaren Vinylester-Copolymerisate können auch als Low-Profile-Additiv (LPA) eingesetzt werden. Bei der Herstellung von flächigen Kunststoffteilen durch Wärmehärtung von ungesättigten Polyesterharz-Zusammensetzungen (UP-Harze) werden Low-Profile-Additive zugesetzt, um den dabei auftretenden Volumenschwund zu reduzieren bzw. zu kompensieren. Das Low-Profile-Additiv reduziert das Schrumpfen beim Aushärten, baut Eigenspannungen ab, verringert Mikrorissbildung und erleichtert die Einhaltung von Fertigungstoleranzen.

Für die Anwendung als Low-Profile-Additiv werden die vernetzbaren Vinylester-Copolymerisate im Allgemeinen in Styrol gelöst und gegebenenfalls mit weiteren Additiven wie Füllstoffen, Verdickeren, Initiatoren und Verarbeitungshilfsmitteln appliziert. Die vernetzbaren Vinylester-Copolymerisate können auch in Kombination mit herkömmlichen Low-Profile-Additiven verwendet werden. Beispielsweise in Kombination mit Polyvinylacetat, carboxylfunktionellen Polyvinylacetaten und Polymethylmethacrylat.

Als ungesättigte Polyesterharz-Zusammensetzungen werden üblicherweise Reaktionsprodukte einer Dicarbonsäure oder eines Dicarbonsäureanhydrids mit einem Polyol eingesetzt. Derartige Polyesterharz-Zusammensetzungen enthalten üblicherweise zusätzlich ein oder mehrere Monomere mit ethylenisch ungesättigten Gruppen, im allgemeinen Styrol. Styrol wird der Polyesterharz-Zusammensetzung zugegeben, um den Polyester zu lösen und um sicherzustellen, dass die Polyesterzusammensetzung eine fließfähige Masse ist. Zur Verstärkung der mit der Polyesterharz-Zusammensetzung erhaltenen Kunststoffteile enthälten die Polyesterharz-Zusammensetzungen noch Fasermaterialien wie Glasfaser, Carbonfaser oder entsprechende Fasermatten (Fiber Reinforced Plastic composites = FPR composites).

Die vernetzbaren Vinylester-Copolymerisate können für alle gängige Herstellungsverfahren von FRP Composites als Low-Profile-Additive eingesetzt werden, wie beispielsweise für Sheet Molding Compound Technology (SMC), Bulk Molding Compound Technology (BMC), Resin Transfer Molding (RTM), Resin Injection Molding (RIM). Bei dem BMC-Verfahren werden die Bestandteile des Compounds, die styrolische Polyesterharz-Lösung, das Low Profile Additive, der Vernetzungskatalysator, Füllstoff, Formtrennmittel sowie gegebenenfalls weitere Zusatzstoff zu einer pastösen Masse vermischt, danach Glasfaser zugemischt und anschließend unter Anwendung von Druck und Temperatur das Formteil hergestellt. Beispielsweise werden mit dieser Technik Reflektoren für Autoscheinwerfer hergestellt. Bei dem SMC-Verfahren wird analog dem BMC-Verfahren eine pastöse Masse aus styrolischer Polyesterharz-Lösung, Low Profile Additiv, Vernetzungskatalysator, Füllstoff, Formtrennmittel sowie gegebenenfalls weiteren Zusatzstoffen hergestellt, welche auf einen Polyamidfilm aufgetragen wird. Anschließend wird Glasfaser auf diese Schicht aufgestreut und schließlich eine weitere Schicht der pastösen Masse ausgetragen. Dieses flächige Sandwich wird dann von der Folie abgezogen, in Stücke geschnitten und unter Anwendung von Druck und Temperatur zu Formteilen verpresst. Formteile, welche mittels dieser Technik hergestellt werden, werden beispielsweise als Heckklappen von Automobilen eingesetzt.

Die Zusammensetzung der Rezepturen sowie die Einsatzmengen der Low-Profile-Additive hängen von dem gewählten Herstellungsverfahren ab und sind dem Fachmann bekannt. Im Allgemeinen werden die vernetzbaren Vinylester-Copolymerisate in einer 10 bis 50 Gew.-%-igen Lösung in Styrol appliziert. Die Einsatzmenge beträgt im Allgemeinen 5 bis 50 Gew.-Teile, vorzugsweise 30 bis 40 Gew.-Teile der Lösung, bezogen auf die Gesamtrezeptur.

Durch Einsatz von vernetzbaren Vinylester-Copolymerisaten als Polymerzusatz, wie beispielsweise als LPA, werden Kunststoffteile mit verbesserten mechanischen Eigenschaften (z.B. verbesserter Biegefestigkeit) erhalten.

Die nachfolgenden Beispiele dienen zur weiteren Erläuterung der Erfindung, ohne diese in irgendeiner Weise einzuschränken.

**Herstellung der Basispolymerisate:**

Beispiel 1:

.In einem 21-Glasrührtopf mit Ankerrührer, Rückflusskühler und Dosiereinrichtungen wurden 307.0 g Ethylacetat, 50,0 g Vinylacetat, 0,5 g Glycidylmethacrylat und 1.6 g PPV (t-Butylperpivalat, 75 %-ige Lösung in Aliphaten) vorgelegt. Anschließend wurde die Vorlage bei einer Rührerdrehzahl von 200 Upm unter Stickstoff auf 70°C aufgeheizt. Nach Erreichen der Innentemperatur von 70°C wurde 1150,0 g Vinylacetat, 12,0 g Glycidylmethacrylat und Initiatorlösung (14,8 g PPV) zudosiert. Die Monomerlösung wurde innerhalb von 240 Minuten und die Initiatorlösung innerhalb von 300 Minuten zudosiert. Nach Ende der Initiatordosierungen wurde noch 2 Stunden bei 80°C nachpolymerisiert. Es wurde eine klare Polymerlösung mit einem Feststoffgehalt von 79 Gew.-% erhalten. Unter Vakuum und erhöhter Temperatur wurde das Ethylacetat abdestilliert. Der getrocknete Film aus Ethylacetatlösung (Schichtdicke 70 Mikrometer) war klar. Das Copolymer hatte einen Gehalt an Glycidylmethacrylat (reaktivem Comonomer b)) von 1 Gew.-% bezogen auf die Gesamtmasse der eingesetzten Monomere. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 2:

Analog der Vorgehensweise von Beispiel 1 wurde eine Copolymer hergestellt, welches aus 97 Gew.-% Vinylacetat und 3 Gew.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 3:

Analog der Vorgehensweise von Beispiel 1 wurde eine Copolymer hergestellt, welches aus 97 Gew.-% Vinylacetat und 3 Gew.-% Glycidylmethacrylat erhalten wurde. Abweichend zu Beispiel 1 wurden aber anstelle von Ethylacetat 247 g Isopropanol eingesetzt. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 4:

Analog der Vorgehensweise von Beispiel 1 wurde eine Copolymer hergestellt, welches aus 95 Gew.-% Vinylacetat und 5 Gew.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 5:

Analog der Vorgehensweise von Beispiel 1 wurden eine Copolymer hergestellt, welches aus 94 Gew.-% Vinylacetat und 6 Gew.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 6:

Analog der Vorgehensweise von Beispiel 1 wurde eine Copolymer hergestellt, welches aus 90 Gew.-% Vinylacetat und 10 Gew.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 7:

Analog der Vorgehensweise von Beispiel 1 wurde eine Copolymer hergestellt, welches aus 88 Gew.-% Vinylacetat und 12 Gew.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 8:

Analog der Vorgehensweise von Beispiel 1 wurde eine Copolymer hergestellt, welches aus 98 Gew.-% Vinylacetat, 1 Gew.-% Veo-Va9[R] und 1 Gew.-%.Glycidylmethacrylat erhalten wurde. Dabei wurde das zweite Monomer analog den Mengenverhältnissen des Hauptmonomeren dosiert. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 9:

Analog der Vorgehensweise von Beispiel 8 wurde eine Copolymer hergestellt, welches aus 90 Gew.-% Vinylacetat, 9 Gew.-% Veo-Va9[R] und 1 Gew.-% Glycidylmethacrylat erhalten wurde. Das Polymerisate hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 10:

Analog der Vorgehensweise von Beispiel 8 wurde eine Copolymer hergestellt, welches aus 76 Gew.-% Vinylacetat, 23 Gew.-% Veo-Va9[R] und 1 Gew.-% Glycidylmethacrylat erhalten wurde. Das Polymerisate hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 11:

Analog der Vorgehensweise von Beispiel 8 wurde eine Copolymer hergestellt, welches aus 79 Gew.-% Vinylacetat, 15 Gew.-% Vinyllaurat und 6 Gew.-% Glycidylmethacrylat erhalten wurde. Zusätzlich wurde zur Molekulargewichtseinstellung 1,0 Gew.-% Acetaldehyd zur Vorlage geben. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 12:

Analog der Vorgehensweise von Beispiel 8 wurde eine Copolymer hergestellt, welches aus 74 Gew.-% Vinylacetat, 20 Gew.-% Vinyllaurat und 6 Gew.-% Glycidylmethacrylat erhalten wurde. Zusätzlich wurde zur Molekulargewichtseinstellung 1,0 Gew.-% Acetaldehyd zur Vorlage geben. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 13:

Analog der Vorgehensweise von Beispiel 8 wurde eine Copolymer hergestellt, welches aus 69 Gew.-% Vinylacetat, 25 Gew.-% Vinyllaurat und 6 Gew.-% Glycidylmethacrylat erhalten wurde. Zusätzlich wurde zur Molekulargewichtseinstellung 1,0 Gew.-%. Acetaldehyd zur Vorlage geben. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 14:

Analog der Vorgehensweise von Beispiel 8 wurde eine Copolymer hergestellt, welches aus 59 Gew.-% Vinylacetat, 35 Gew.-% Vinyllaurat und 6 Gew.-% Glycidylmethacrylat erhalten wurde. Zusätzlich wurde zur Molekulargewichtseinstellung 1,0 Gew.-% Acetaldehyd zur Vorlage geben. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 15:

Analog der Vorgehensweise von Beispiel 1 wurde eine Copolymer hergestellt, welches aus 58 Gew.-% Vinylacetat, 35 Gew.-% Vinyllaurat, 6 Gew.-% Glycidylmethacrylat und 1 Gew.-% Crotonsäure erhalten wurde. Dabei wurde das Vinyllaurat, und die Crotonsäure, analog den Mengenverhältnissen des Hauptmonomeren dosiert. Zusätzlich wurde zur Molekulargewichtseinstellung 1,0 Gew.-% Acetaldehyd zur Vorlage geben. Das Polymerisat hatte einen Gehalt an Restmonomeren von unter 0,5 Gew.-%, bezogen auf die Gesamtmasse des Polymerisats. Die weitern Polymereigenschaften sind in Tabelle 1 aufgeführt.

Beispiel 16:

Analog der Vorgehensweise von Beispiel 15 wurde eine Copolymer hergestellt, welches aus 58 Gew.-% Vinylacetat, 35 Gew.-% Butylacrylat, 6 Gew.-% Glycidylmethacrylat und 1 Gew.-% Crotonsäure erhalten wurde. Zusätzlich wurde zur Molekulargewichtseinstellung 15,0 Gew.-% Isopropanol zur Vorlage geben. Das Polyme.risat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 17:

Analog der Vorgehensweise von Beispiel 15 wurde eine Copolymer hergestellt, welches aus 58 Gew.-% Vinylacetat, 35 Gew.-% Butylacrylat, 6 Gew.-% Glycidylmethacrylat und 1 Gew.-% Acrylsäure erhalten wurde. Zusätzlich wurde zur Molekulargewichtseinstellung 4,5 Gew.-% Butyraldehyd zur Vorlage geben. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 18:

Analog der Vorgehensweise von Beispiel 15 wurde eine Copolymer hergestellt, welches aus 58 Gew.-% Vinylacetat, 35 Gew.-% Butylacrylat, 6 Gew.-% Glycidylmethacrylat und 1 Gew.-% Hydroxyethylacrylat erhalten wurde. Zusätzlich wurde zur Molekulargewichtseinstellung 3,0 Gew.-% Acetaldehyd zur Vorlage geben. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 19:

Analog der Vorgehensweise von Beispiel 8 wurde eine Copolymer hergestellt, welches aus 78 Gew.-% Vinylacetat, 10 Gew.-% Vinyllaurat und 12 Gew.-% Glycidylmethacrylat erhalten wurde. Zusätzlich wurde zur Molekulargewichtseinstellung 1,2 Gew.-% Acetaldehyd zur Vorlage geben. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Tabelle 1: Zusammensetzungen und Eigenschaften der Basispolymerisate:

| Bsp. | Monomerzusammensetzung ([Gew.-%])[a] | | | | | H[c] [mPas] | K[d] | Mw[e] [kg/mol] | Mn[e] [kg/mol] |
|---|---|---|---|---|---|---|---|---|---|
| | VAc[b] | Monomer a)[b] | GMA[b] | Monomer c)[b] | Monomer d)[b] | | | | |
| 1 | (99) | - | (1) | - | - | 5,1 | 40,1 | - | - |
| 2 | (97) | - | (3) | - | - | 7,4 | 45,1 | 138 | 28 |
| 3 | (97) | - | (3) | - | - | 2,2 | 24,8 | 25 | 13 |
| 4 | (95) | - | (5) | - | - | 8,6 | 44,7 | 149 | 21 |
| 5 | (94) | - | (6) | - | - | 9,1 | 48,2 | 185 | 23 |
| 6 | (90) | - | (10) | - | - | 11,7 | 54,1 | 350 | 40 |
| 7 | (88) | - | (12) | - | - | 12,1 | 55,4 | 373 | 41 |
| 8 | (98) | VV9 (1) | (1) | - | - | 6,1 | 42,1 | - | - |
| 9 | (90) | VV9 (9) | (1) | - | - | 6,0 | 42,2 | - | - |
| 10 | (76) | VV9 (23) | (1) | - | - | 6,1 | 42,6 | - | - |
| 11 | (79) | VL (15) | (6) | - | - | 2, 3 | 28,3 | 44 | 12 |
| 12 | (74) | VL (20) | (6) | - | - | 2,5 | 28,2 | 45 | 14 |
| 13 | (69) | VL (25) | (6) | - | - | 2,7 | 28,9 | 48 | 14 |
| 14 | (59) | VL (35) | (6) | - | - | 2,8 | 28,8 | 56 | 15 |
| 15 | (58) | VL (35) | (6) | - | CS (1) | 2,5 | 27,2 | - | - |
| 16 | (58) | - | (6) | BA (35) | CS (1) | 5,1 | 38,6 | 119 | 20 |
| 17 | (58) | - | (6) | BA (35) | AS (1) | 3,7 | 33,7 | 78 | 19 |
| 18 | (58) | - | (6) | BA (35) | HEA (1) | 2,3 | 26,9 | 49 | 16 |
| 19 | (78) | VL (10) | (12) | - | - | 3,1 | 31,1 | 54 | 18 |
| 20 | (73) | VL (15) | (12) | - | - | 3,1 | 32,0 | - | - |
| 21 | (68) | VL (20) | (12) | - | - | 3,1 | 33,3 | - | - |
| 22 | (63) | VL (25) | (12) | - | - | 3,2 | 32,2 | - | - |
| 23 | (58) | VL (30) | (12) | - | - | 3,1 | 31,8 | - | - |

(fortgesetzt)

| Bsp. | Monomerzusammensetzung ([Gew.-%])[a] | | | | | H[c] [mPas] | K[d] | Mw[e] [kg/mol] | Mn[e] [kg/mol] |
|---|---|---|---|---|---|---|---|---|---|
| | VAc[b] | Monomer a)[b] | GMA[b] | Monomer c)[b] | Monomer d)[b] | | | | |
| 24 | (53) | VL (35) | (12) | - | - | 3,7 | 33,8 | - | - |

a) : Die Angaben in Gew.-% beziehen sich auf das Gesamtgewicht des Basispolymerisats.
b) : VAc: Vinylacetat; VV9: VeoVa9[R]; VL: Vinyllaurat; GMA: Glycidylmethacrylat; BA: n-Butylacrylat; CS: Crotonsäure; AS: Acrylsäure; HEA: Hydroxyethylacrylat.
c) : H: Höppler-Viskosität: bestimmt nach DIN 53015 (10 % in Ethylacetat bei 20°C).
d): K: K-Wert: bestimmt nach DIN EN ISO 1628-2 (1 Gew.-% in Aceton).
e):Mw: gewichtsmittleres Molekulargewicht, Mn: zahlenmittleres Molekulargewicht.

Beispiel 20:

Analog der Vörgehensweise von Beispiel 19 wurde eine Copolymer hergestellt, welches aus 73 Gew.-% Vinylacetat, 15 Gew.-% Vinyllaurat und 12 Gew.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 21:

Analog der Vorgehensweise von Beispiel 19 wurde eine Copolymer hergestellt, welches aus 68 Gew.-% Vinylacetat, 20 Gew.-% Vinyllaurat und 12 Gew.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 22:

Analog der Vorgehensweise von Beispiel 19 wurde eine Copolymer hergestellt, welches aus 63 Gew.-% Vinylacetat, 25 Gew.-% Vinyllaurat und 12 Gew.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 23:

Analog der Vorgehensweise von Beispiel 19 wurde eine Copolymer hergestellt, welches aus 58 Gew.-% Vinylacetat, 30 Gew.-% Vinyllaurat und 12 Gew.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

Beispiel 24:

Analog der Vorgehensweise von Beispiel 19 wurde eine Copolymer hergestellt, welches aus 53 Gew.-% Vinylacetat, 35 Gew.-% Vinyllaurat und 12 Ges.-% Glycidylmethacrylat erhalten wurde. Das Polymerisat hatte einen Gehalt an Restmonomeren von unter 0,5 Gew.-%, bezogen auf die Gesamtmasse des Polymerisats. Die weiteren Polymereigenschaften sind in Tabelle 1 aufgeführt.

**Polymeranaloge Umsetzungen der Basispolymerisate zu den vernetzbaren Vinylester-Copolymerisaten (nicht gemäß der Erfindung):**

Polymeranaloge Umsetzungen in einem Lösungsmittel:

Vergleichsbeispiel 25:

Es wurden 300 g des Basispolymerisats aus Beispiel 1 in einem 1 1 Reaktor in 300 g Butylacetat gelöst und mit 0,3 g Katalysator (Triphenylphosphin), 0,1 g Inhibitor (Hydrochinon) gemischt und ca. 15 minuten gerührt. Danach wurden 2 g Crotonsäure zugesetzt und der Lösung auf Rückflusstemperatur (~ 125°C) erhitzt. Nach ca. 30 Stunden wurden die flüchtigen Bestandteile unter Vakuum entfernt und das Produkt isoliert. Das vernetzbare Vinylester-Copolymerisat hatte einen Gehalt an Restmonomeren von unter 0,5 Gew.-%, bezogen auf die Gesamtmasse des Polymerisats. Die weiteren Eigenschaften des vernetzbaren Vinylester-Copolymerisats sind in Tabelle 2 aufgeführt.

Vergleichsbeispiel 26:

300 g des Basispolymerisats aus Beispiel 2 wurde analog der Vorgehensweise von Beispiel 25 umgesetzt, jedoch wurden in Abwandlung 6 g Crotonsäure und 0,9 g Katalysator (Triphenylphosphin) eingesetzt. Das vernetzbare Vinylester-Copolymerisat hatte einen Gehalt an Restmonomeren von unter 0,5 Gew.-%, bezogen auf die Gesamtmasse des Polymerisats. Die weiteren Eigenschaften des vernetzbaren Vinylester-Copolymerisats sind in Tabelle 2 aufgeführt.

Vergleichsbeispiel 27:

300 g des Basispolymerisats aus Beispiel 3 wurden analog der vorgehensweise von Beispiel 25 umgesetzt, jedoch wurden in Abwandlung 2 g Methacrylsäure und 0,9 g Katalysator (Triphenylphosphin) eingesetzt. Das vernetzbare Vinylester-Copolymerisat hatte einen Gehalt an Restmonomeren von unter 0,5 Gew.-%, bezogen auf die Gesamtmasse.des Polymerisats. Die weiteren Eigenschaften des vernetzbaren Vinylester-Copolymerisats sind in Tabelle 2 aufgeführt.

Vergleichsbeispiel 28:

300 g des Basispolymerisats aus Beispiel 4 wurde analog der Vorgehensweise von Beispiel 25 umgesetzt, jedoch wurden in Abwandlung 10 g Crotonsäure und 1,5 g Katalysator (Triphenylphosphin) eingesetzt. Das vernetzbare Vinylester-Copolymerisat hatte einen Gehalt an Restmonomeren von unter 0,5 Gew.-%, bezogen auf die Gesamtmasse des Polymerisats. Die weiteren Eigenschaften des vernetzbaren Vinylester-Copolymerisats sind in Tabelle 2 aufgeführt.

Vergleichsbeispiel 29:

300 g des Basispolymerisats aus Beispiel 5 wurde analog der Vorgehensweise von Beispiel 25 umgesetzt, jedoch wurden in Abwandlung 12 g Crotonsäure und 1,8 g Katalysator (Triphenylphosphin) eingesetzt. Das vernetzbare Vinylester-Copolymerisat hatte einen Gehaltan Restmonomeren von unter 0,5 Gew.-%, bezogen auf die.Gesamtmasse des Polymerisats. Die weiteren Eigenschaften des vernetzbaren Vinylester-Copolymerisats sind in Tabelle 2 aufgeführt.

Vergleichsbeispiel 30 :

300 g des Basispolymerisats aus Beispiel 8 wurde analog der Vorgehensweise von Beispiel 25 umgesetzt. Das vernetzbare Vinylester-Copolymerisat hatte einen Gehalt an Restmonomeren von unter 0,5 Gew.-%, bezogen auf die Gesamtmasse des Polymerisats. Die weiteren Eigenschaften des vernetzbaren Vinylester-Copolymerisats sind in Tabelle 2 aufgeführt.

Vergleichsbeispiel 31:

300 g des Basispolymerisats aus Beispiel 9 wurde analog der Vorgehensweise von Beispiel 25 umgesetzt. Das vernetzbare Vinylester-Copolymerisat hatte einen Gehalt an Restmonomeren von unter 0,5 Gew.-%, bezogen auf die Gesamtmasse des Polymerisats.
Die weiteren Eigenschaften des vernetzbaren Vinylester-Copolymerisats sind in Tabelle 2 aufgeführt.

Vergleichsbeispiel 32:

300 g des Basispolymerisats aus Beispiel 10 wurde analog der Vorgehensweise von Beispiel 25 umgesetzt. Das vernetzbare Vinylester-Copolymerisat hatte einen Gehalt an Restmonomeren von unter 0,5 Gew.-%, bezogen auf die Gesamtmasse des Polymerisats. Die weiteren Eigenschaften des vernetzbaren Vinylester-Copolymerisats sind in Tabelle 2 aufgeführt.

Polymeranaloge Umsetzung in Schmelze:

Beispiel 33:

Eine durch Polymerisation nach Beispiel 11 erhaltene Lösung mit einem Feststoffgehalt von 79 Gew.-% und einer Menge an Basispolymerisat von 300 g wurde unter Vakuum und erhöhter Temperatur vom Ethylacetat befreit. Das verbleibende Basispolymerisat wurde durch Erwärmen auf 135°C aufgeschmolzen. Anschließend wurden 12 g Crotonsäure und 0,1 g Inhibitor (Hydrochinon) zugegeben. Nach 5 Stunden wurden die flüchtigen Bestandteile unter Vakuum entfernt und die Schmelze abgekühlt. Das vernetzbare Vinylester-Copolymerisat hatte einen Gehalt an Restmönomeren von unter 0,5 Gew.-%, bezogen auf die Gesamtmasse des Polymerisats. Die weiteren Eigenschaften des vernetzbaren Vinylester-Copolymerisats sind in Tabelle 2 aufgeführt.

Beispiele 34 bis 40:

Analog zu Beispiel 33 wurden jeweils 300 g der Basispolymerisate aus den Beispielen 12 bis 18 umgesetzt. Die vernetzbaren Vinylester-Copolymerisate hatten jeweils einen Gehalt an Restmonomeren von unter 0,5 Gew.-%, bezogen auf die Gesamtmasse des jeweiligen Polymerisats. Die weiteren Eigenschaften der jeweiligen vernetzbaren Vinylester-Copolymerisate sind in Tabelle 2 aufgeführt.

Tabelle 2: Vernetzbare Vinylester-Copolymerisate:

| Bsp. | Basispolymerisat | Monomer g)[a] ([Gew.-%]) | TPP[b] [Gew.-%] | H[c] [mPas] | K[d] | Mn[e] [kg/mol] |
|------|------------------|--------------------------|-----------------|-------------|------|----------------|
| V25 | 1 | CS (0,7) | 0,1 | 5,6 | 42,1 | 30 |
| V26 | 2 | CS (2,0) | 0,3 | 8,5 | 46,7 | 30 |
| V27 | 3 | MAS (0,7) | 0,3 | 2,3 | 25,1 | 13 |
| V28 | 4 | CS (3, 3) | 0,5 | 9,1 | 46,8 | 21 |
| V29 | 5 | CS (4,0) | 0,6 | 10,5 | 50,4 | 25 |
| V30 | 8 | CS (0,7) | 0,1 | 7,6 | 44,1 | 20 |
| V31 | 9 | CS (0,7) | 0,1 | 7,3 | 43,5 | 19 |
| V32 | 10 | CS (0,7) | 0,1 | 7,1 | 43,4 | 19 |
| 33 | 11 | CS (4,0) | 0, 6 | 2,9 | 33,0 | 13 |
| 34 | 12 | CS (4,0) | 0,6 | 3,2 | 32,7 | 14 |
| 35 | 13 | CS (4,0) | 0,6 | 3,5 | 32,9 | 15 |
| 36 | 14 | CS (4,0) | 0,6 | 3,2 | 32,4 | 16 |
| 37 | 15 | CS (4,0) | 0,6 | 5,8 | 41,9 | 19 |
| 38 | 16 | CS (4,0) | 0,6 | 8,6 | 45,8 | 22 |
| 39 | 17 | CS (4,0) | 0,6 | 6,2 | 42,5 | 20 |
| 40 | 18 | CS (4,0) | 0,6 | 3,8 | 35,4 | 17 |
| 41 | 19 | CS (8,0) | 1,2 | 7,7 | 42,8 | 18 |
| 42 | 20 | CS (8,0) | 1,2 | 6,7 | 42,1 | 19 |
| 43 | 21 | CS (8,0) | 1,2 | 6,3 | 41,9 | 21 |
| 44 | 22 | CS (8,0) | 1,2 | 7,1 | 43,1 | 20 |
| 45 | 23 | CS (8,0) | 1,2 | 5,9 | 41,8 | 19 |

(fortgesetzt)

| Bsp. | Basispolymerisat | Monomer g)a) ([Gew.-%]) | TPPb) [Gew.-%] | Hc) [mPas] | Kd) | Mne) [kg/mol] |
|---|---|---|---|---|---|---|
| 46 | 24 | CS (4,0) | 0,6 | 7,3 | 43,7 | 20 |

a): CS: Crotonsaure; MAS: Methacrylsaure; die Angabe in Gew.-% bezieht sich auf das Gewicht des Basispolymerisats.
b): TPP: Triphenylphosphin; die Angabe in Gew.-% bezieht sich auf das Gewicht des Basispolymerisats.
c): H: Höppler-Viskosität: bestimmt nach DIN 53015 (10 % in Ethylacetat bei 20°C).
d): K: K-Wert: bestimmt nach DIN EN ISO 1628-2 (1 Gew.-% in Aceton).
e): Mn: zahlenmittleres Molekulargewicht.

Beispiel 41:

Es wurden 300 g des Harzes aus Beispiel 19 in einem Reaktor bei 135°C aufgeschmolzen. Anschließend wurden 24 g Crotonsäure und 0,1 g Inhibitor (Hydrochinon) zugegeben. Nach 15 minütigem Rühren wurden 3,6 g Katalysator (Triphenylphosphin) zugegeben. Nach 5 Stunden wurden die flüchtigen Bestandteile unter Vakuum entfernt und die Schmelze abgekühlt. Das vernetzbare Vinylester-Copolymerisat hatte einen Gehalt an Restmonomeren von unter 0,5 Gew.-%, bezogen auf die Gesamtmasse des Polymerisats. Die weiteren Eigenschaften des vernetzbaren Vinylester-Copolymerisats sind in Tabelle 2 aufgeführt.

Beispiele 42 bis 46:

300 g der Basispolymerisate aus den Beispielen 20 bis 24 wurden jeweils analog zu Beispiel 41 umgesetzt. Die vernetzbaren Vinylester-Copolymerisate hatten jeweils einen Gehalt an Restmonomeren von unter 0,5 Gew.-%, bezogen auf die Gesamtmasse des jeweiligen Polymerisats. Die weiteren Eigenschaften der jeweiligen vernetzbaren Vinylester-Copolymerisate sind in Tabelle 2 aufgeführt.
Die vernetzbaren Vinylester-Copolymerisate (Tabelle 2, Beispiele 25 bis 46) wurden als klare Lösungen oder klare bzw. transparente Harze erhalten. Es trat keine Trübung oder Gelierung der vernetzbaren Vinylester-Copolymerisate auf. Die vernetzbaren Vinylester-Copolymerisaten lagen also unvernetzt vor.

**Lagerstabilität der vernetzbaren Vinylester-Copolymerisate:**

Exemplarisch wurde das vernetzbare Vinylester-Copolymerisat aus Beispiel 33 aufgeschmolzen und für 4 h bei 135°C gehalten. Dabei wurde nur ein sehr geringer Anstieg der Höppler-Viskosität des vernetzbaren Vinylester-Copolymerisats beobachtet (von anfänglich 33,0 mPa·s auf 34,3 mPa·s). Nach Abkühlung auf Raumtemperatur war das vernetzbare Vinylester-Copolymerisat transparent und zeigte keine Anzeichen von Trübung oder Gelierung. Dieses Beispiel belegt, dass die vernetzbaren Vinylester-Copolymerisate in Abwesenheit von Vernetzungs-Initiatoren sogar unter sehr harschen thermischen Bedingungen stabil sind. Unter Normalbedingungen nach DIN50014 ist dementsprechend eine Lagerstabilität für einen Zeitraum von mehr 12 Monaten zu erwarten.

**Vernetzungsgeschwindigkeit bzw. Reaktivität der vernetzbaren Vinylester-Copolymerisate:**

Die Vernetzungsgeschwindigkeiten bzw. Reaktivitäten der vornetzbaren Vinylester-Copolymerisate korrelieren makroskopisch mit Viskositätsänderungen während der Vernetzung.

Vergleichsbeispiel 47:

Zum Beleg der hohen Vernetzungsgeschwindigkeiten bzw. hohen Reaktivitäten der vernetzbaren Vinylester-Copolymerisate wurde fein gemahlenes Copolymerisat aus Vergleichsbeispiel 25 mit 1 Gew.-% Initiator TBPIPC (tert.Butylperoxy-isopropylcarbonat 10%ig in i-Propanol; Halbwertzeit von 6 min bei 137°C), bezogen auf das Gewicht das Polymer, gemischt und bei 30°C im Vakuum getrocknet (Tabelle 3).
Die Vernetzung wurde anschließend unter isothermen Reaktionsbedingungen bei einer Temperatur von 135°C vorgenommen. Der Viskositätsanstieg während der Vernetzung wurde durch Messung der Schmelzrheologie mit dem Gerät Bohlin CVO 120 HR bestimmt. Es wurde das Messsystem Platte/Platte gewählt. Die komplexe Schmelzviskosität wurde durch oszillierende Messung bei einer Frequenz von 1 Hz und konstanter Temperatur gemessen.
Der Quotient aus der Anfangsschmelzviskosität und von Viskositäten während der Vernetzung ist ein Maß für den Grad der Vernetzung und damit für die Reaktivität der vernetzbaren Vinylester-Copolymerisate. So wurde bei dem vernetzbaren Vinylester-Copolymerisat aus Vergleichsbeispiel 25 ein Anstieg der Viskosität bei 135°C innerhalb von 10 min um den Faktor 3 gemessen, d.h. ein Quotient von 3 erhalten.

$$\frac{\text{Schmelzviskosität nach 10 min bei 135°C}}{\text{Anfangsschmelzviskosität}} = \text{Quotient}$$

Zum Vergleich wurde das Basispolymerisat aus Beispiel 1 den identischen Bedingungen unterworfen, wobei keine Veränderung der Viskosität auftrat (Quotient = 1) (Tabelle 3, Vergleichsbeispiel V51), d.h. es fand keine Vernetzung statt.

Vergleichsbeispiel 47 und vergleichsbeispiel V51 veranschaulichen den hohen sowie raschen Viskositätsanstieg der Zusammensetzung während der Vernetzung. Dies ist ein Beleg für die hohe Vernetzungsgeschwindigkeit bzw. Reaktivität der vernetzbaren Vinylester-Copolymerisate.

In den Vergleichsbeispielen 48 bis 50 wurden die vernetzbaren Vinylester-Copolymerisate aus den Vergleichsbeispielen 26, 28 bzw. 29 entsprechend der in Vergleichsbeispiel 47 genannten Bedingungen eingesetzt. Die Vergleichsbeispiele 48 bis 50 belegen, dass die Vernetzungsgeschwindigkeiten der vernetzbaren Vinylester-Copolymerisate mit zunehmender Anzahl an vernetzbaren Gruppen zunimmt (Tabelle 3).

Tabelle 3: Quotient der Schmelzviskositäten:

| Bsp. | Polymerisat aus Beispiel | GMA-Gehalt[a) [Gew. -%] | Quotient |
|------|--------------------------|-------------------------|----------|
| V47 | V25 | 1 | 3 |
| V48 | V26 | 3 | 8 |
| V49 | V28 | 5 | 17 |
| V50 | V29 | 6 | 28 |
| V51 | 1 | 1 | 1 |
| a): GMA: Glycidylmethacrylat; die Angabe in Gew.-% bezieht sicn aut das Gesamtgewicht des Basispolymerisats. | | | |

**Mechanische Eigenschaften der vernetzbaren Vinylester-Copolymerisate:**

Der Einfluss des Molekulargewichts Mn der vernetzbaren Vinylester-Copolymerisate auf die mechanischen Eigenschaften wurde an Hand von Composite-Bauteilen untersucht, die aus ungesättigten Polyesterharzen und unter Einsatz von vernetzbaren Vinylester-Copolymerisaten als Polymerzusatz hergestellt wurden.

Herstellung des Prüfkörpers:

Es wurde eine Mischung aus 100 Gewichtsteilen eines ungesättigten Polyesterharzes (Orthophthalsäure-Maleinsäureanhydrid-Harz, 65 %-ig in Styrol) mit 1 Gewichtsteil eines Cobalt-Beschleunigers (NL 49-P von Akzo Nobel), 1,5 Gewichtsteilen eines Initiators (Butanox M 50 von Akzo Nobel) und gegebenenfalls 2 Gewichtsteilen Polymerzusatz (Tabelle 4) innig vermischt und in eine Form gegossen. Nach Aushärtung für 24 Stunden bei Raumtemperatur, 24 Stunden bei 65°C und 2 h bei 100°C wurden der Prüfkörper (Länge/Breite/Höhe = 100mm/15mm/ 2mm) erhalten.

Die Biegefestigkeit des Prüfkörpers wurde nach EN ISO 14125 bestimmt. Die Prüfergebnisse für unterschiedliche Composite-Bauteile mit unterschiedlichen Polymerzusätzen sind in der Tabelle 4 aufgeführt.

Ein Composite-Bauteil ohne Polymerzusatz (Tabelle 4, Vergleichsbeispiel V52) blieb in seinen Werten für die Biegefestigkeit weit hinter den Composite-Bauteilen zurück, die die erfindungsgemäßen vernetzbaren Vinylester-Copolymerisate als Polymerzusätze enthielten (Tabelle 4, Beispiele 57 bis 78). Der Einsatz eines niedermolekularen Vinylacetat-Homopolymers als Polymerzusatz führte zu einem Composite-Bauteil mit einem noch schlechteren Wert für die Biegefestigkeit, wie er ohne Polymerzusatz erhalten wurde (Tabelle 4, Vergleichsbeispiele V52 und V53). Auch bei Einsatz höhermolekularer oder vernetzbarer, aber nicht erfindungsgemäßer Polymerisate (Tabelle 4, Vergleichsbeispiele V54 bis V56) als Polymerzusätze wurden kleinere Werte für die Biegefestigkeit erzielt als bei Einsatz der erfindungsgemäßen vernetzbaren Vinylester-Copolymerisate (Tabelle 4, Beispiele 57 bis 78).

Tabelle 4.: Einfluss der Molekularmassen Mn der vernetzbaren Vinylester-Copolymerisate auf die mechanischen Eigenschaften von Composite-Bauteilen:

| Bsp. | Polymerzusatz | K[a) | Mn[b) [kg/mol] | BF[c) [MPa] |
|---|---|---|---|---|
| V52 | - | - | - | 15 |
| V53 | Vinylacetat-Homopolymer | 20,1 | 6,8 | 10 |
| V54 | Vinylacetat-Glycidylmethacrylat-Copolymer | 22,2 | 7 | 18 |
| V55 | Vinylacetat-Homopolymer | 31,4 | 16 | 20 |
| V56 | Vinylacetat-Homopolymer | 43,0 | 35 | 27 |
| V57 | Polymer aus VBsp. 25 | 42,1 | 30 | 43 |
| V58 | Polymer aus VBsp. 26 | 46,7 | 30 | 44 |
| V59 | Polymer aus VBsp. 27 | 25,1 | 13 | 37 |
| V60 | Polymer aus VBsp. 28 | 46,8 | 21 | 45 |
| V61 | Polymer aus VBsp. 29 | 50,4 | 25 | 46 |
| V62 | Polymer aus VBsp. 30 | 44,1 | 20 | 43 |
| V63 | Polymer aus VBsp. 31 | 43,5 | 19 | 42 |
| V64 | Polymer aus VBsp. 32 | 43,4 | 19 | 40 |
| 65 | Polymer aus Bsp. 33 | 33,0 | 13 | 52 |
| 66 | Polymer aus Bsp. 34 | 32,7 | 14 | 54 |
| 67 | Polymer aus Bsp. 35 | 32,9 | 15 | 55 |
| 68 | Polymer aus Bsp. 36 | 32,4 | 16 | 58 |
| 69 | Polymer aus Bsp. 37 | 41,9 | 19 | 60 |
| 70 | Polymer aus Bsp. 38 | 45,8 | 22 | 60 |
| 71 | Polymer aus Bsp. 39 | 42,5 | 20 | 58 |
| 72 | Polymer aus Bsp. 40 | 35,4 | 17 | 56 |
| 73 | Polymer aus Bsp. 41 | 42,8 | 18 | 61 |
| 74 | Polymer aus Bsp. 42 | 42,1 | 19 | 62 |
| 75 | Polymer aus Bsp. 43 | 41,9 | 21 | 63 |
| 76 | Polymer aus Bsp. 44 | 43,1 | 20 | 63 |
| 77 | Polymer aus Bsp. 45 | 41,8 | 19 | 64 |
| 78 | Polymer aus Bsp. 46 | 44,6 | 21 | 65 |

a) K: K-Wert: bestimmt nach DIN EN ISO 1628-2 (1 Gew.-% in Aceton).
b) Mn: zahlenmittleres Molekulargewicht.
c) BF: Biegefestigkeit: bestimmt nach DIN EN ISO 14125.

Aus den in Tabelle 4 aufgeführten Beispielen und Vergleichsbeispielen geht hervor, dass mit höhermolekularen Polymeren als Polymerzusätze für Composite-Bauteilen höhere Werten für Biegefestigkeit erreichbar sind. Besonders hohe Werte für Biegefestigkeiten werden mit den erfindungsgemäß vernetzbaren Vinylester-Copolymerisaten erhalten.

**Verwendung der vernetzbaren Vinylester-Copolymerisate als LPA:**

Tabelle 5: Formulierung für Kunststoffteile:

| Type | Rohstoff | Gew.-T. |
|---|---|---|
| Orthophthalsäure-Maleinsäureanhy-drid-Harz (UP-Harz) | UP-Harz (34,5 %ig in Styrol) | 65,5 |
| LPA1 bzw. LPA2 | LPA (40 %ig in Styrol) | 30,0 |
| Styrol | Monostyrol | 4,5 |
| Trigonox® C | tert.Butylperoxy-benzoat | 1,5 |
| Byk®-W 996 | Netz- und Dispergieradditiv | 2,9 |
| p-Benzochinon | Inhibitor (10 % in MMA) | 0,7 |
| Akzo Nobel NL-49 | Beschleuniger (1 %ig Co in Ester) | 1,1 |
| Byk®-9076 | Netz- und Dispergieradditiv | 0,5 |
| Ruß 9257-45 | Farbpaste schwarz | 10,0 |
| Millicarb® OG | Kreide (CaCO3) | 200,0 |
| Zwischensumme | | 316,7 |
| Luvatol® MK35 | Eindickungsmittel(35 %ig MgO in UP) | 1,5 |
| Vetrotex P204 | Glasfaser | 85,9 |
| Als Low-Profile-Additive wurden eingesetzt: LPA1 (Vergleich): Copolymerisat aus Vinylacetat und 1 Gew.-% Crotonsäure (Molekulargewicht Mn = 31 kg/mol). LPA2: Vernetzbares Vinylester-Copolymerisat aus Vergleichsbeispiel 29. | | |

Aus den in der Tabelle 5 aufgeführten Rohstoffen wurde eine Paste geknetet. Kurz vor der Verarbeitung wurde noch Luvatol MK 35, ein Verdicker, eingerührt. Danach wurde mit der Paste und mit den Glasfasern ein Handlaminat erstellt und zu einem SMC verarbeitet. Das Produkt wurde 3 Tage bei 20°C und 50 % Raumfeuchte gelagert. Danach wurde es bei 160°C in einer gängigen SMC-Presse zu einem Bauteil gepresst.

Der Schrumpf wurde nach dem Erkalten der Presse ermittelt und die Volumenänderung in Prozent bestimmt (Tabelle 6). Minuswerte zeigen an, dass das Bauteil größer als die ursprüngliche Form war.

Tabelle 6:

| | x | | | y | | |
|---|---|---|---|---|---|---|
| | Abmaß [mm] | Länge [mm] | Schrumpf [‰] | Abmaß [mm] | Länge [mm] | Schrumpf [‰] |
| LPA1 | 0,397 | 457,392 | -0,42 | 0,456 | 457,451 | -0,55 |
| LPA2 | 0,342 | 457, 344 | -0,33 | 0,411 | 457, 402 | -0,43 |

Aus der Tabelle 6 geht hervor, dass vernetzbare Vinylester-Copolymerisate und herkömmliche, carboxylfunktionelle Poly.vinylacetate in vergleichbarer Weise als LPA geeignet sind. Beide bewirken in der Formulierung eine Expansion beim Verpressen. Die vorteilhaften Eigenschaften der erfindungsgemäßen vernetzbaren Vinylester-Copolymerisate, wie beispielsweise.hohe Biegefestigkeiten, wirken sich auch günstig auf die Anwendung der erfindungsgemäßen vernetzbaren Vinylester-Copolymerisate als LPA aus.

**Patentansprüche**

1. Verfahren zur Herstellung von vernetzbaren Vinylester-Copolymerisaten durch radikalisch initiierter Polymerisation von

   a) einem oder mehreren Vinylestern und
   b) einem oder mehreren ethylenisch ungesättigten, Epoxy-funktionellen Monomeren, und
   anschließender polymeranaloger Umsetzung der so erhaltenen Basispolymerisate mit einer oder mehreren ethylenisch ungesättigten Säuren g), so dass zumindest eine ethylenisch ungesättigte, polymerisierbare Gruppe pro Basispolymerisat eingebracht wird, **dadurch gekennzeichnet, dass** die polymeranaloge Umsetzung der Basispolymerisate mit einer oder mehreren ethylenisch ungesättigten Säuren g) in Schmelze erfolgt, und die vernetzbaren Vinylester-Copolymerisate Molekulargewichte Mn von $\geq$ 6.500 g/mol haben.

2. Verfahren zur Herstellung von vernetzbaren Vinylester-Copolymerisaten nach Anspruch 1, **dadurch gekennzeichnet, dass** als Vinylester a) ein oder mehrere Vinylester von unverzweigten oder verzweigten Alkylcarbonsäuren mit 1 bis 20 C-Atomen eingesetzt werden.

3. Verfahren zur Herstellung von vernetzbaren Vinylester-Copolymerisaten nach Anspruch 1 oder 2, **dadurch gekennzeichnet, dass** die Epoxy-funktionellen Monomere b) 1 bis 20 C-Atome haben, die linear oder verzweigt, offenkettig oder cyclisch angeordnet sein können.

4. Verfahren zur Herstellung von vernetzbaren Vinylester-Copolymerisaten nach Anspruch 1 bis 3, **dadurch gekennzeichnet, dass** die ethylenisch ungesättigte Säuren g) ausgewählt werden aus der Gruppe der ethylenisch ungesättigten Carbonsäuren oder deren Salze.

5. Verfahren zur Herstellung von vernetzbaren Vinylester-Copolymerisaten nach Anspruch 1 bis 4, **dadurch gekennzeichnet, dass** die vernetzbaren Vinylester-Copolymerisate pro Molekularmasse Mn von 1.000 g/mol 0,001 bis 100 vernetzbare Gruppen haben.

6. Verfahren zur Herstellung von vernetzbaren Vinylester-Copolymerisaten nach Anspruch 1 bis 5, **dadurch gekennzeichnet, dass** die vernetzbaren Vinylester-Copolymerisate haben einen Gehalt an Restmonomeren von $\leq$ 5 Gew.-% haben.

**Claims**

1. Process for the preparation of crosslinkable vinyl ester copolymers by free-radical-initiated polymerization of

   a) one or more vinyl esters and
   b) one or more ethylenically unsaturated, epoxy-functional monomers, and
   subsequent polymer-analogous reaction of the resultant parent polymers with one or more ethylenically unsaturated acids g), so that at least one ethylenically unsaturated, polymerizable group is introduced per parent polymer, **characterized in that** the polymer-analogous reaction of the parent polymers with one or more ethylenically unsaturated acids g) takes place in the melt, and the molar masses Mn of the crosslinkable vinyl ester copolymers are $\geq$ 6500 g/mol.

2. Process for the preparation of crosslinkable vinyl ester copolymers according to Claim 1, **characterized in that** the vinyl ester (s) a) used comprise(s) one or more vinyl ester(s) of unbranched or branched alkyl carboxylic acids having from 1 to 20 carbon atoms.

3. Process for the preparation of crosslinkable vinyl ester copolymers according to Claim 1 or 2, **characterized in that** the epoxy-functional monomers b) have from 1 to 20 carbon atoms, and the arrangement of these can be linear or branched, open-chain or cyclic.

4. Process for the preparation of crosslinkable vinyl ester copolymers according to any of Claims 1 to 3, **characterized in that** the ethylenically unsaturated acids g) are selected from the group of the ethylenically unsaturated carboxylic acids or their salts.

5. Process for the preparation of crosslinkable vinyl ester copolymers according to any of Claims 1 to 4, **characterized in that** the crosslinkable vinyl ester copolymers have from 0.001 to 100 crosslinkable groups per molecular mass Mn of 1000 g/mol.

6. Process for the preparation of crosslinkable vinyl ester copolymers according to any of Claims 1 to 5, **characterized in that** the content of residual monomers in the crosslinkable vinyl ester copolymers is $\leq$ 5% by weight.

**Revendications**

**1.** Procédé pour la préparation de copolymérisats d'esters vinyliques réticulables, par polymérisation à amorçage radicalaire de

   a) un ou plusieurs esters vinyliques et
   b) un ou plusieurs monomères à fonction époxy, à insaturation éthylénique, et
   mise en réaction subséquente, conduisant à des polymères analogues, des polymérisats de base ainsi obtenus avec un ou plusieurs acides g) à insaturation éthylénique, de sorte qu'au moins un groupe polymérisable à insaturation éthylénique est introduit par polymérisat de base, **caractérisé en ce que** la réaction conduisant à des polymères analogues du polymérisat de base avec un ou plusieurs acides g) à insaturation éthylénique s'effectue dans la masse fondue, et
   les copolymérisats d'esters vinyliques réticulables ont des masses moléculaires Mn de $\geq 6\,500$ g/mole.

**2.** Procédé pour la préparation de copolymérisats d'esters vinyliques réticulables selon la revendication 1, **caractérisé en ce qu'**on utilise comme ester(s) vinylique(s) a) un ou plusieurs esters vinyliques d'acides alkylcarboxyliques ramifiés ou non ramifiés ayant de 1 à 20 atomes de carbone.

**3.** Procédé pour la préparation de copolymérisats d'esters vinyliques réticulables selon la revendication 1 ou 2, **caractérisé en ce que** les monomères b) à fonction époxy ont de 1 à 20 atomes de carbone qui peuvent être en disposition linéaire ou ramifiée, en chaîne ouverte ou cyclique.

**4.** Procédé pour la préparation de copolymérisats d'esters vinyliques réticulables selon l'une quelconque des revendications 1 à 3, **caractérisé en ce que** les acides g) à insaturation éthylénique sont choisis dans le groupe des acides carboxyliques à insaturation éthylénique ou leurs sels.

**5.** Procédé pour la préparation de copolymérisats d'esters vinyliques réticulables selon l'une quelconque des revendications 1 à 4, **caractérisé en ce que** les copolymérisats d'esters vinyliques réticulables comportent de 0,001 à 100 groupes réticulables par masse moléculaire Mn de 1 000 g/mole.

**6.** Procédé pour la préparation de copolymérisats d'esters vinyliques réticulables selon l'une quelconque des revendications 1 à 5, **caractérisé en ce que** les copolymérisats d'esters vinyliques réticulables ont une teneur en monomères résiduels de $\leq 5$ % en poids.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 04325531 A
- EP 0897376 A
- US 4716080 A
- JP 08221738 A
- GB 1174391 A
- GB 1456412 A
- US 3579490 A
- US 3317453 A
- EP 1682591 A
- DE 1932715 A
- EP 0506703 A